# EUROPEAN PATENT SPECIFICATION

(11) **EP 0 605 026 B1**
(45) Date of publication and mention of the grant of the patent: **06.05.1999**
(21) Application number: 93203260.0
(22) Date of filing: 22.11.1993
(51) Int. Cl.: H04N 5/445, H04B 1/20

(54) **Data entry and display system**
System zur Dateneingabe und -darstellung
Système d'entrée de données et d'affichage

(30) Priority: 30.11.1992 EP 92203687
(43) Date of publication of application: 06.07.1994
(73) Proprietor: Koninklijke Philips Electronics N.V., 5621 BA Eindhoven (NL)
(72) Inventor: Landsbergen, Sebastianus Petrus Johannes, NL-5656 AA Eindhoven (NL)
(74) Representative: Kooiman, Josephus Johannes Antonius

(56) References cited:
- EP-A- 0 103 707
- EP-A- 0 120 345
- EP-A- 0 231 659
- EP-A- 0 472 400
- EP-A- 0 476 842
- EP-A- 0 483 463
- GB-A- 2 155 713
- US-A- 4 633 297
- US-A- 4 706 121
- IEEE TRANSACTIONS ON CONSUMER ELECTRONICS vol. 24, no. 3 , 30 August 1978 , NEW YORK US pages 436 - 441 CLIFFORD C. ET AL 'MICROPROCESSOR BASED, SOFTWARE DEFINED TELEVISION CONTROLLER'
- IEEE TRANSACTIONS ON CONSUMER ELECTRONICS vol. 38, no. 3 , 30 August 1992 , NEW YORK US pages 725 - 733 XP000311917 KINGHORN J. 'ENHANCED ON-SCREEN DISPLAYS FOR SIMPLER TV CONTROL'
- IEEE TRANSACTIONS ON CONSUMER ELECTRONICS vol. 31, no. 1 , 28 February 1985 , NEW YORK US pages 59 - 69 PLATTE H 'A NEW INTELLIGENT REMOTE CONTROL UNIT FOR CONSUMER ELECTRONIC DEVICES'
- FUNKSCHAU. vol. 64, no. 22 , 16 October 1992 , MUNCHEN DE pages 44 - 46 XP000311514 DIETMAR L. 'Keine Probleme mit der Sendersuche'

## Description

### FIELD OF THE INVENTION

The invention relates to a system for entering a plurality of data into an apparatus, comprising a control circuit, which is coupled to a display device, the control circuit being adapted to perform the following steps:
(a) forming and displaying a text sequence which reproduces data already entered and identifies a data to be entered;
(b) entering the identified data;
(c) repeating steps (a) and (b) as long as the plurality of data has not been entered. Such an apparatus may have various forms. It may be, for example a television receiver, a video recorder, and the like. In that case the data are operating data jointly constituting a complicated operating instruction.

### BACKGROUND OF THE INVENTION

Consumer apparatuses such as television receivers and video recorders generally have a wide range of operational functions. For their operation the consumer must sometimes enter many data and perform complicated operations. An illustrative example is programming a video recorder. In order to have this recorder record a program transmitted by a given television station at a given date for a given period of time, the consumer must enter these data in a given sequence and in a given format.

A system for entering such data is known from IEEE Transactions on Consumer Electronics, Vol. CE-24, No 3. August 1978. The known system is adapted to conduct a dialog with a user for entering said data. On a first part of a display, the user is prompted for a data to be entered. On a second part of the display, a sequence of the data entered so far is shown. After a data has been entered, the message on the first part of the display is replaced by another message, asking for confirmation of the data entered, or prompting for another data to be entered. This process proceeds until all data required for a certain task have been entered. At that time, the display reproduces all data entered. A drawback of such a 'prompting' entry system is, that during the process of entering data the system does not furnish a comprehensible survey of the data already entered and how they are interpreted in the context of the task at hand.

Similar data entry systems can be found in modern apparatuses, where the operational procedure is often guided or supported by an operation menu which is displayed on a display screen. Such a menu offers the user a survey of selection possibilities and presents the entered data in a readable form. Such an operation system is described, for example in European Patent Application EP-A 0 160 545. The data to be entered (such as day, time, period, channel number) of an operating instruction for a TV receiver are simultaneously indicated on the display screen. Subsequently, they are successively selected for entry by means of a cursor. Although the known menu control is being increasingly used, it does not essentially furnish much more than an often cryptical survey of data in a tabular form in which it appears to be difficult for the general consumer to find his way about.

It is also known to operate apparatuses with commands which are entered by means of speech or a keyboard. However, this type of entry is subject to considerable limitations. Only a limited vocabulary of predetermined commands is recognized and accepted. The user must know this vocabulary and enter it flawlessly. An illustrative example is the Personal Computer. This mode of operation is unsuitable for use in consumer apparatuses such as television receivers.

Operation of an apparatus by entering a natural language is increasingly being aimed at. This language can be applied by means of speech or a keyboard. However, entry of a natural language requires analysis and interpretation of the language by the apparatus. The mode of speech and text recognition required for this purpose is still insufficiently developed for economically responsible use in consumer apparatuses. For this purpose, the natural language is too rich in words and sentence constructions.

### OBJECT AND SUMMARY OF THE INVENTION

It is an object of the invention to provide a system with which data can be entered into an apparatus in a user-friendly way.

To achieve that object the system according to the invention is characterized in that the control circuit is further adapted to grammatically adapt the text sequence to the content of the data already entered and the number of times step (a) has been performed.

Such a system communicates with the user in a user-friendly way, *viz*. in the form of a text sequence which may be written in a natural language. However, the language is not generated by the consumer. The system thus need not comprise any complicated speech or text recognition means. Instead, the text is generated by the system itself in a form which is comprehensible to the user. In this way a complicated operating instruction is built up step by step and reproduced. Display of an operating instruction in the natural language is much more user-friendly than display in a cryptical tabular form.

In a practical embodiment the control circuit comprises a memory in which a plurality of text sequences is selectably stored, and selection means for selecting a corresponding text sequence for each step.

Dependent on the grammatical rules, the grammatical structure of the displayed text sequence may be adapted to a selected language. For example, the reproduced order of the data in the displayed sentence may be different for each language, even if the order of entry in both languages is equal. Compare, for example the position of the adverb of time in the English-language sentence "Record the BBC1 program *today* from 8.00 to 9.00 pm" with the German-language sentence "Nimm *heute* von 20.00 bis 21.00 Uhr das BBC1 Programm auf". The sentence construction may also be adapted to the data which have been entered. The system may display, for example the operating instruction "Record a BBC1 program" or "Record an ITV program", where the way in which the indefinite article is written is dependent on the station name displayed.

In an embodiment of the system a plurality of values which can be entered is successively presented for the data to be entered. The user can browse through the presented values by means of, for example + and - instructions and confirm these values by means of a decision button.

In a further embodiment the system is provided with indicator means for subjecting an entered data in the displayed text sequence to modification. An operating instruction already entered can then be simply modified afterwards.

### BRIEF DESCRIPTION OF THE FIGURES

Fig. 1 shows a video recorder including a data entry and display system according to the invention,
Fig. 2 shows a flow chart of a communication program performed by a microprocessor shown in Fig. 1.

### DESCRIPTION OF EMBODIMENTS

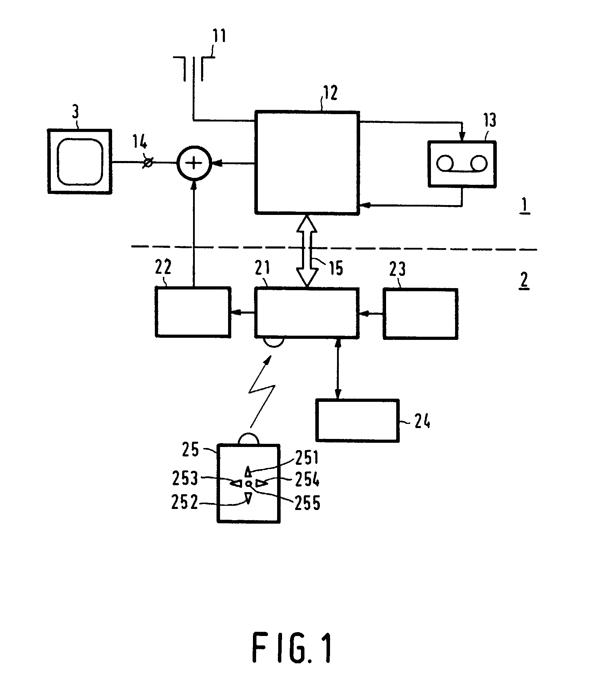

The invention will now be described with reference to a video recorder which is shown in Fig. 1. The video recorder has a recording/playback section 1 and a control section 2. The control section 2 constitutes the data entry and display system according to the invention.

The recording and playback section 1 comprises a picture signal input 11, a signal processing circuit 12, a recording medium 13 and a picture signal output 14 which is coupled to a television receiver 3 in the embodiment shown. This section 1 has a conventional structure and need not be further explained.

The control section 2 comprises a microprocessor 21 which is coupled to a character generator 22, a clock and calender circuit 23, a memory 24 and a remote control unit 25. In the embodiment shown the remote control unit has an "up" key 251, a "down" key 252, a "left" key 253, a "right" key 254 and a decision button 255. Other keys which are not important for understanding the invention are not shown in the Figures.

The control section 2 is coupled to the recording and playback section 1 by means of a control bus 15 for causing this section to play back, record, tune to a station and the like. To this end a control program is performed by the microprocessor 21, which program is generally known. The control section also ensures the communication with the user. To this end the microprocesor 21 receives operating instructions from the remote control unit 25 and displays them on the television receiver 3 by means of a character generator 22. Said communication with the user is effected under the control of a communication program which is also stored in the microprocessor 21. The communication program will be explained hereinafter. It has been assumed that the user has notified that he wants to program a television recording. Such an operating instruction requires the entry of a comparatively large number of data, for example a station name or number, a recording date, a start time and a stop time.

A plurality of text sequences (sentences) is stored in the memory 24 of the control section. The microprocessor can select one of these sentences and apply it to the character generator 22 for display on the display screen. The following Table shows a plurality of sentences S(1) ... S(4) which are suitable for display when the video recorder is being programmed. Moreover, each sentence is stored in a plurality of languages (here English, German and French).

| | |
|---|---|
| S(1) | Record the **P(1)** program |
| | Nimm das **P(1)** Programm auf |
| | Enregistrez le programme **P(1)** |
| S(2) | Record the P(1) program **P(2)** |
| | Nimm **P(2)** das P(1) Programm auf |
| | Enregistrez le programme P(1) **P(2)** |
| S(3) | Record the P(1) program from **P(3)** P(2) |
| | Nimm P(2) ab **P(3)** das P(1) Programm auf |
| | Enregistrez le programme P(1) P(2) de **P(3)** |
| S(4) | Record the P(1) program from P(3) to **P(4)** P(2) |
| | Nimm P(2) von P(3) bis **P(4)** das P(1) Programm auf |
| | Enregistrez le programme P(1) P(2) de P(3) à **P(4)** |

In the Table the References P(1), P(2), P(3) and P(4) are parameters representing the station name, the recording date, the start time and the stop time, respectively. Upon entry, these parameters are given a value and are then taken up as such in the sentence. A parameter printed in bold means that it is displayed in a distinguishable manner, for example blinking or in a different colour.

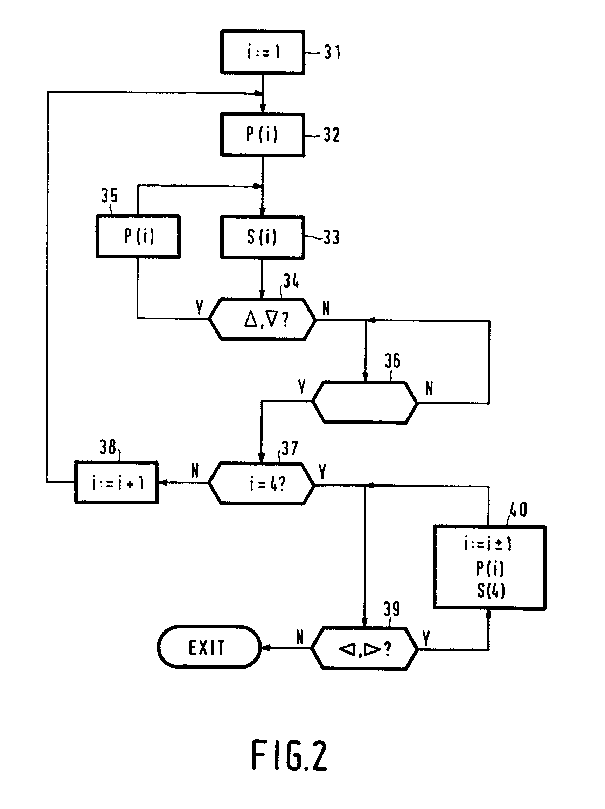

Fig. 2 shows a flow chart of the previously mentioned communication program which is performed by the microprocessor. In a step 31 of this program an initial value is allocated to a variable i (item number). This item number corresponds to a parameter to be entered. More particularly, i=1 means that the station name is entered, i=2 means that the recording date is entered, i=3 means that the start time is entered and i=4 means that the stop time is entered. In the step 31 the item number i is given the initial value 1.

In a step 32 a value is allocated to the parameter P(i). For i=1 (entry of the station name) this value is looked up in a station table which has been composed by the user in a previous installation procedure and is stored in a non-volatile memory (not shown). The station table comprises, for example the names of BBC1, BBC2, ITV, CH4, ....

In a step 33 the sentence S(i) is read from the memory and applied for display to the character generator. For i=1 this means that the sentence S(1) is displayed and that the station name BBC1 is initially filled in for the parameter P(1). Dependent on the selected language, the display screen thus shows the sentence:
"Record the **BBC1** program",
in which the item BBC1 stands out.

In a step 34 it is subsequently checked whether the user has depressed the "up" key 251 or "down" key 252 (see Fig. 1). If this is the case, the program performs the step 35 so as to modify the value of the parameter P(i). Subsequently, the communication program returns to the step 33. The user can thus browse cyclically through the various station names in the station table by using said keys. If he wants to record a BBC2 program, he can thus realise the display of the sentence:
"Record the **BBC2** program".

A waiting time for the energization of the communication program is observed by means of the decision button 255 (see Fig. 1) in a step 36. The program subsequently checks in a step 37 whether the entered item was the last of this operating instruction. As yet, this is not the case. In a step 38 the item number i is raised by 1 and the program returns to step 32. The item number i now acquires the value 2. In the step 33 the sentence S(2) is selected from the memory. The display screen now shows the sentence:
"Record the BBC2 program **today**",
in which "today" is the first of a series of values "today", "tomorrow", "daily", "weekly", "on ..." which can be allocated to the parameter P(2). The possible values of P(2) are also stored (dependent on the language) in the memory 24. In the way already described the user can browse through these values. If the value "on..." is selected, the microprocessor reads the current date from the clock and calender circuit 23 (see Fig. 1) and adds two days to create the date of the day after tomorrow. Further operation of the "up" and "down" keys causes this date to be postponed or advanced, respectively. In this way the user can realise the display of the sentence:
"Record the BBC2 program **on 7 Nov**".

If the choice made is confirmed by means of the decision button (step 36), i will acquire the value 3 (step 38) and the display screen will show the sentence S(3) (step 33). This sentence is:
"Record the BBC2 program from **8.00 pm**, on 7 Nov" in which the displayed start time can now be modified by the user. If the user chooses 9.00 pm, i will become 4 and the display screen will show the sentence S(4) in which the stop time is asked:
"Record the BBC2 program from 9.00 **to 10.00 pm** on 7 Nov".

If it has been found in step 37 that i has reached the value 4, the entry of the operating instruction is terminated. However, the user is offered the possibility to modify an entry. To this end it is checked in a step 39 whether the "left" key 253 or the "right" key 254 (see Fig. 1) has been depressed. In that case the item number i is raised or lowered in a step 40 and the parameter P(i) is selected for a possible modification, while the full operating instruction in the form of sentence S(4) is displayed on the display screen.

As is apparent from the German-language version of the sentences S(1) ... S(4) in the memory, the entry of the operating instructions in German would have proceeded as follows:
"Nimm das **BBC2** Programm auf".
"Nimm **am 7. Nov** das BBC2 Programm auf".
"Nimm am 7. Nov ab **21.00 Uhr** das BBC2 Programm auf".
"Nimm am 7. Nov von 21.00 bis **22.00 Uhr** das BBC2 Programm auf".

This German-language example illustrates, *inter alia*, that a displayed sentence is more than a simple addition of a new item to the previous sentence. The grammatical structure of the sentence is different for both languages, although the order of the data to be entered is equal in both cases. The grammatical difference between "from ... pm/am" in the sentence S(3) and "from ... to ... pm/am" in the sentence S(4) is also clearly apparent in the German language.

Finally it is to be noted that the data entry and display system may alternatively be accommodated completely in the remote control unit 25 (see Fig. 1). In that case the remote control unit only needs to transmit the data entries to the video recorder.

## Claims

1. A system for entering a plurality of data into an apparatus, comprising a control circuit (2), which is coupled to a display device (3), the control circuit being adapted to perform the following steps:
(a) forming and displaying (33) a text sequence which reproduces data already entered and identifies a data to be entered;
(b) entering (34-36) the identified data;
(c) repeating steps (a) and (b) as long as the plurality of data has not been entered,
characterized in that the control circuit (2) is further adapted to grammatically adapt the text sequence to the content of the data already entered and the number of times step (a) has been performed.

2. A system as claimed in Claim 1, characterized in that the control circuit (2) comprises:
- a memory (24) in which a predetermined text sequence is selectably stored for each step (a);
- selection means (33) for selecting the corresponding text sequence in each step (a).

3. A system as claimed in Claim 1, characterized in that the control circuit (2) is adapted to display the text sequence in a plurality of selectable languages.

4. A system as claimed in Claim 1, characterized in that the control circuit (2) is adapted to successively furnish a plurality of enterable values for the data to be entered.

5. A system as claimed in Claim 1, characterized in that the control circuit (2) is further coupled to indicator means (253, 254) for indicating a data in the displayed text sequence for modification.

6. An apparatus provided with a system as claimed in any one of the preceding Claims.

## Patentansprüche

1. System zum Eingeben einer Anzahl Daten in ein Gerät mit einer Steuerschaltung (2), die mit einer Wiedergabeanordnung (3) gekoppelt ist, wobei diese Wiedergabeanordnung die nachfolgenden Verfahrensschritte durchführt:
(a) die Bildung und die Wiedergabe (33) einer Textfolge, die bereits eingegebene Daten wiedergibt und einzugebende Daten identifiziert;
(b) die Eingabe (34 - 36) der identifizierten Daten;
(c) die Wiederholung der Schritte (a) und (b) solange die Anzahl Daten noch nicht eingegeben worden ist,
dadurch gekennzeichnet, dass die Steuerschaltung (2) weiterhin dazu angepasst ist, die Textfolge an den Inhalt der bereits eingegebenen Daten sowie an die Anzahl Male, dass der Verfahrensschritt (a) durchgeführt worden ist, grammatisch anzupassen.

2. System nach Anspruch 1, dadurch gekennzeichnet, dass die Steuerschaltung (2) die nachfolgenden Elemente aufweist:
- einen Speicher (24), in dem eine vorbestimmte Anzahl von Textfolgen für jeden Schritt selektierbar gespeichert sind, und
- Selektionsmittel (33) zum Selektieren der entsprechenden Textfolge in jedem Verfahrensschritt (a).

3. System nach Anspruch 1, dadurch gekennzeichnet, dass die Steuerschaltung (2) dazu vorgesehen ist, die Textfolge in einer Vielzahl selektierbarer Sprachen wiederzugeben.

4. System nach Anspruch 1, dadurch gekennzeichnet, dass die Steuerschaltung (2) dazu vorgesehen ist, nacheinander eine Anzahl eingebbarer Werte für die einzugebenden Daten zu liefern.

5. System nach Anspruch 1, dadurch gekennzeichnet, dass die Steuerschaltung (2) weiterhin mit Indikatormitteln (253, 254) gekoppelt ist um eine Information in der wiedergegebenen Textfolge zur Änderung anzugeben.

6. Gerät mit einem System nach einem der vorstehenden Ansprüche.

## Revendications

1. Système pour entrer une pluralité de données dans un appareil, comprenant un circuit de commande (2), qui est couplé à un dispositif d'affichage (3), le circuit de commande étant conçu pour exécuter les étapes suivantes :
(a) former et afficher (33) une séquence de texte qui reproduit des données déjà entrées et identifie une donnée devant être entrée;
(b) entrer (34-36) la donnée identifiée;
(c) répéter les étapes (a) et (b) aussi longtemps que la pluralité de données n'a pas été entrée, caractérisé en ce que le circuit de commande (2) est également conçu pour adapter grammaticalement la séquence de texte au contenu des données déjà entrées et le nombre de fois où l'étape (a) a été exécutée.

2. Système suivant la revendication 1, caractérisé en ce que le circuit de commande (2) comprend :
- une mémoire (24) dans laquelle une séquence de texte prédéterminée est stockée pour chaque étape (a) de façon à pouvoir être sélectionnée;
- des moyens de sélection (33) pour sélectionner la séquence de texte correspondante lors de chaque étape (a).

3. Système suivant la revendication 1, caractérisé en ce que le circuit de commande (2) est conçu pour afficher la séquence de texte dans une pluralité de langues pouvant être sélectionnées.

4. Système suivant la revendication 1, caractérisé en ce que le circuit de commande (2) est conçu pour fournir successivement une pluralité de valeurs pouvant être entrées pour les données devant être entrées.

5. Système suivant la revendication 1, caractérisé en ce que le circuit de commande (2) est également couplé à des moyens d'indication (253, 254) pour indiquer une donnée dans la séquence de texte affichée en vue de sa modification.

6. Appareil pourvu d'un système suivant l'une quelconque des revendications précédentes.
